# EUROPÄISCHE PATENTSCHRIFT

(11) **EP 2 946 867 B1**
(45) Veröffentlichungstag und Bekanntmachung des Hinweises auf die Patenterteilung: **25.01.2017**
(21) Anmeldenummer: 15160668.8
(22) Anmeldetag: 24.03.2015
(51) Int. Cl.: B23K 11/00, B23K 11/16, B23K 11/34, B32B 15/08, F16B 5/08, B23K 103/04, B23K 103/16, B23K 103/18

(54) **VERFAHREN ZUM VERBINDEN EINES ANSCHLUSSELEMENTS MIT EINEM SANDWICHBLECH DURCH STOFFSCHLÜSSIGES VERBINDEN, INSBESONDERE DURCH SCHWEISSEN**
METHOD OF CONNECTING A CONNECTING ELEMENT TO A SANDWICH PANEL OF SHEET METAL THROUGH MATERIAL JOINING, IN PARTICULAR THROUGH WELDING
PROCÉDÉ DE CONNEXION D'UN ÉLÉMENT DE RACCORDEMENT AYANT UNE TÔLE EN SANDWICH AU TRAVERS D'UNE LIAISON MATERIAU, EN PARTICULIER PAR SOUDAGE

(30) Priorität: 03.04.2014 DE 102014104751
(43) Veröffentlichungstag der Anmeldung: 25.11.2015
(73) Patentinhaber: ThyssenKrupp Steel Europe AG, 47166 Duisburg (DE)
(72) Erfinder: Zörnack, Markus, 44369 Dortmund (DE); Dr. Böger, Thorsten, 47906 Kempen (DE)
(74) Vertreter: ThyssenKrupp Intellectual Property GmbH

(56) Entgegenhaltungen:
- JP-A- S55 106 691
- JP-A- S57 187 185
- US-A1- 2007 272 660
- US-A1- 2009 031 655

## Beschreibung

Die Erfindung betrifft ein Verfahren zum Verbinden eines Bolzens als Anschlusselements mit einem Sandwichblech, umfassend die folgenden Schritte: a) Bereitstellen eines Sandwichbleches mit wenigstens einer zentral angeordneten Kernschicht aus Kunststoff und mit zwei außen angeordneten Deckschichten aus Metall, b) Bereitstellen eines Anschlusselementes aus Metall, wobei das Anschlusselement eine Grundplatte aufweist, c) Durchführen des Anschlusselementes durch wenigstens eine Deckschicht des Sandwichbleches, und d) Verbinden des Anschlusselementes mit dem Sandwichblech, wobei das Anschlusselement stoffschlüssig mit beiden Deckschichten verbunden wird.

Bei zahlreichen Anwendungen werden mehrschichtige bzw. mehrlagige Bleche ("Sandwichbleche") eingesetzt. Hierbei kann es sich beispielsweise um ein Blech mit zwei metallischen Deckschichten handeln, zwischen denen ein Kunststoffkern eingeschlossen ist. Sandwichbleche zeichnen sich insbesondere durch eine hohe Biegesteifigkeit bei geringem Gewicht aus. Dies liegt daran, dass bei einer Biegebelastung des Sandwichbleches die größten Zug- oder Druckspannungen aufgrund der Materialdehnung bzw. -stauchung außen (also in den Deckschichten) entstehen, so dass für die Deckschichten bevorzugt ein Material mit hoher Steifigkeit und Festigkeit wie Stahl eingesetzt wird. In der Mitte des Sandwichbleches (also in der Kernschicht) entstehen demgegenüber bei einer Biegebelastung nur sehr geringe oder gar keine Zug- oder Druckspannungen ("neutrale Faser"), so dass in diesem Bereich ein weniger belastbares aber leichtes Material wie Kunststoff bevorzugt wird. Ein weiterer Vorteil von Sandwichblechen liegt in seinen schwingungsdämpfenden Eigenschaften, die sich durch die Kernschicht erzielen lassen und beispielsweise aus akustischen Gründen angestrebt werden.

Besondere Herausforderungen stellen sich bei der Verbindung von Anschlusselementen mit Sandwichblechen. Recht gut umsetzbar ist eine derartige Verbindung, solange Sandwichmaterialien mit relativ dicken Deckschichten und einer relativ dünnen Kernschicht verwendet werden, da sich in diesem Fall die beiden Deckschichten während des Fügens leicht miteinander verbinden lassen, beispielsweise durch einen Schweißvorgang.

Ein derartiges Verfahren wird beispielsweise in der JP 63 132 782 A beschrieben. Es wird vorgeschlagen, einen Bolzen einseitig auf ein Sandwichblech aufzusetzen und mit dem Sandwichblech zu verschweißen. Das Sandwichblech weist zwei Deckschichten auf, die jeweils wesentlich dicker sind als die zwischen den Deckschichten vorgesehene Kernschicht. Die Verschweißung erfolgt über zwei Elektroden, die von gegenüberliegenden Seiten auf das Sandwichblech gepresst werden, wobei eine der beiden Elektroden den zu verschweißenden Bolzen umschließt, um ihn während des Schweißvorgangs zu fixieren. Durch die Verschweißung wird eine Verbindung zwischen dem Bolzen und der ersten Deckschicht erzielt. Zudem wird eine punktuelle Verbindung zwischen beiden Deckschichten erzielt. Der Bolzen wird jedoch nicht direkt und unmittelbar mit der zweiten Deckschicht verbunden. Dies hat den Nachteil, dass der Bolzen nur geringe Querkräfte aufnehmen kann.

Ein alternatives Verfahren ist aus der JP 05 193 044 A bekannt. Es wird vorgeschlagen, einen Gewindebolzen durch eine in dem Sandwichblech vorgesehene Bohrung zu führen und mit einer Mutter zu verschrauben. Auch hier handelt es sich um ein Sandwichblech mit zwei Deckschichten, die jeweils wesentlich dicker sind als die zwischen den Deckschichten vorgesehene Kernschicht. Sowohl zwischen dem Bolzenkopf und der einen Deckschicht als auch zwischen der Mutter und der anderen Deckschicht sind Unterlegscheiben vorgesehen. Der einseitig überstehende Teil des Gewindebolzens kann als Anschlusselement genutzt werden. Durch die Verschraubung kann eine indirekte Anbindung des Gewindebolzens an beide Deckschichten erreicht werden. Der Nachteil dieser Verbindung liegt jedoch darin, dass sich die Schraubverbindung aufgrund der geringen Steifigkeit der Kernschicht insbesondere bei Vibrationen leicht lösen kann.

Um weitere Gewichtsreduktionen erreichen zu können, werden immer häufiger Sandwichbleche mit sehr dünnen Deckschichten eingesetzt, was die Anbindung von Anschlusselementen an das Sandwichblech jedoch erschwert. Die Schwierigkeit der Anbindung liegt insbesondere darin begründet, dass das Anschlusselement bei Sandwichblechen mit dünnen Deckschichten und einer dicken Kernschicht regelmäßig nur mit der unmittelbar mit dem Anschlusselement in Verbindung stehenden Deckschicht gefügt werden kann; eine Verbindung zwischen dem Anschlusselement und der zweiten Deckschicht lässt sich jedoch oftmals nicht realisieren. Dies hat zur Folge, dass über das Anschlusselement nur sehr geringe Querkräfte aufgenommen werden können.
Aus der FR 2 752 769 A1 sind mehrere Möglichkeiten bekannt, ein Anschlusselement mit einem Sandwichblech zu verbinden, dessen Deckschichten dünner sind als die Kernschicht. Es wird beispielsweise vorgeschlagen, eine der Deckschichten im Bereich des Anschlusselements durch ein zusätzliches Blech zu verstärken (Fig. 1). Alternativ wird vorgeschlagen, beide Deckschichten im Bereich des Anschlusselements zusammenzuführen, so dass dort keine Kernschicht mehr vorhanden ist (Fig. 2). Auch weitere Möglichkeiten der lokalen Verstärkung des Sandwichbleches werden beschrieben (Fig. 7 - Fig. 9). Die beschriebenen Möglichkeiten haben jedoch entweder die bereits genannten Nachteile von Schraubverbindungen (geringe Zuverlässigkeit bei Vibrationen) oder erfordern eine aufwändige Verstärkung der Sandwichbleche im Bereich der Anschlusselemente.

Ein Verfahren zum Verbinden eines Bolzens als Anschlusselement mit einem Sandwichblech gemäß dem Oberbegriff des Anspruchs 1 ist in der US 2007/0272660 A1 offenbart.
Ausgehend von diesem Stand der Technik liegt der Erfindung daher die Aufgabe zugrunde, das eingangs genannte und zuvor näher beschriebene Verfahren derart auszugestalten und weiterzubilden, dass auf einfache Weise eine zuverlässige Verbindung zwischen dem Anschlusselement und dem Sandwichblech erzeugt werden kann, die mit hohen Querkräften belastbar ist.
Diese Aufgabe wird bei einem Verfahren nach dem Oberbegriff von Patentanspruch 1 dadurch gelöst, dass das Anschlusselement in Schritt c) durch beide Deckschichten des Sandwichbleches soweit hindurchgeführt wird, dass die Grundplatte des Anschlusselements an die untere Deckschicht des Sandwichbleches stößt und somit flächig auf der Oberfläche des Sandwichbleches aufliegt.

Schritt a) des erfindungsgemäßen Verfahrens sieht zunächst vor, dass ein Sandwichblech mit zwei Deckschichten aus Metall und wenigstens einer zwischen den Deckschichten liegenden Kernschicht aus Kunststoff bereitgestellt wird. Nach Schritt b) soll zudem ein Anschlusselement aus Metall bereitgestellt werden. Hierbei handelt es sich um ein Element, über welches andere Bauteile mit dem Sandwichblech verbunden werden können bzw. an das Sandwichblech angeschlossen werden können. In Schritt c) wird das Anschlusselement durch wenigstens eine Deckschicht des Sandwichbleches hindurch geführt. Das Anschlusselement kann beispielsweise entweder durch eine in der Deckschicht vorgesehene Bohrung geführt werden oder einschraubbar bzw. einschlagbar gestaltet sein, so dass keine Bohrung erforderlich ist. Das Anschlusselement kann so weit durch die eine Deckschicht geführt werden, dass es an die andere Deckschicht stößt und diese somit berührt. Alternativ kann das Anschlusselement durch beide Deckschichten des Sandwichbleches hindurch geführt werden. Gemäß Schritt d) wird das Anschlusselement schließlich mit dem Sandwichblech verbunden, was beispielsweise durch eine stoffschlüssige Verbindung wie Kleben oder Schweißen erfolgen kann. Das Anschlusselement wird mit beiden Deckschichten stoffschlüssig verbunden. Dies kann ebenfalls beispielsweise durch Kleben oder Schweißen erfolgen. Die Verbindung zwischen dem Anschlusselement und der ersten Deckschicht erfolgt vorzugsweise in demjenigen Bereich, in dem das Anschlusselement durch die erste Deckschicht hindurch geführt ist. Die Verbindung zwischen dem Anschlusselement und der zweiten Deckschicht erfolgt vorzugsweise in demjenigen Bereich, in dem das Anschlusselement an der zweiten Deckschicht anliegt oder - falls das Anschlusselement auch durch die zweite Deckschicht durchgeführt wird - in demjenigen Bereich, in dem das Anschlusselement durch die zweite Deckschicht hindurch geführt ist. Die erfindungsgemäße Verbindung des Anschlusselementes mit beiden Deckschichten hat gegenüber einer Verbindung mit nur einer der beiden Deckschichten eine deutlich erhöhte Belastbarkeit der Verbindung auch bei Sandwichblechen mit dünnen Deckschichten zur Folge. Insbesondere kann das Anschlusselement über eine derartige Verbindung aufgrund des Abstands zwischen beiden Deckschichten und der zweifachen Einspannung mit besonders hohen Querkräften belastet werden. Erfindungsgemäß wird das Anschlusselement in Schritt c) durch beide Deckschichten des Sandwichbleches geführt. Indem das Anschlusselement nicht nur durch eine, sondern durch beide Deckschichten des Sandwichbleches geführt wird, kann eine besonders zuverlässige Verbindung zwischen beiden Deckschichten und dem Anschlusselement erzeugt werden. Zudem sind bei dieser Ausgestaltung die zu verklebenden oder zu verschweißenden Verbindungsstellen auf beiden Seiten des Sandwichbleches leicht zugänglich.

Das beanspruchte Verfahren ist besonders geeignet für die Verwendung im Fahrzeugbau. Beispielsweise kann das Sandwichblech Teil eines Fahrzeugkarosseriebleches sein und die Anschlusselemente können dazu dienen, Verkleidungsteile aufzunehmen. Ein weiteres Beispiel ist ein zu einer Kraftfahrzeug-Stirnwand geformtes Sandwichblech, an das beispielsweise kleine elektronische Geräte, z.B. Scheibenwischermotoren oder dergleichen angebunden werden können. Das Verfahren hat insbesondere den Vorteil, dass die Anschlusselemente auch während oder nach der Umformung des Sandwichbleches zu einem Bauteil mit dem Sandwichblech verbunden werden können, wodurch die Lagerung der umgeformten Sandwichbauteile erleichtert wird und auch die Gefahr einer Verletzung durch abstehende Anschlusselemente verringert werden kann.

Nach einer Ausgestaltung der Erfindung ist vorgesehen, dass das Anschlusselement mit beiden Deckschichten verschweißt wird. Schweißverfahren bieten sich insbesondere zur Verbindung metallischer Werkstoffe an und ermöglichen eine Verbindung mit einer sehr hohen Festigkeit. Zu dieser Ausgestaltung wird weiter vorgeschlagen, dass das Anschlusselement durch Widerstandsschweißen, insbesondere Kondensator-Entladungsschweißen mit beiden Deckschichten verschweißt wird. Durch Widerstandsschweißen können elektrisch leitfähige Werkstoffe miteinander verschweißt werden, indem ein elektrischer Strom durch die zu verschweißenden Werkstoffe geleitet wird und diese sich aufgrund ihres elektrischen Widerstands im Bereich des Stromflusses erhitzen und aufschmelzen. Widerstandsschweißen zeichnet sich durch eine sehr hohe Geschwindigkeit, einen hohen Automatisierungsgrad und eine gezielte Wärmeeinbringung aus. Zudem kann auf Schweißzusatzwerkstoffe und/oder Verbrennungsgase verzichtet werden.

Eine weitere Lehre der Erfindung sieht vor, dass die Deckschichten aus Stahlblech hergestellt sind. Stahl zeichnet sich durch hohe Festigkeit, hohe Steifigkeit und gute Schweißeigenschaften aus. Alternativ können die Deckschichten aus Aluminium oder Magnesium oder Legierungen daraus hergestellt sein. Der Einsatz dieser Materialien hat insbesondere Gewichtsvorteile zur Folge.

Gemäß einer weiteren Ausbildung der Erfindung wird vorgeschlagen, dass die Deckschichten eine Dicke im Bereich zwischen 0,1 mm und 0,5 mm aufweisen. Mit dem angegebenen Bereich ist die Dicke jeder einzelnen Deckschicht gemeint; die Summe der Dicken beider Deckschichten kann dementsprechend auch außerhalb des angegebenen Bereiches liegen. Durch die geringe Dicke der Deckschichten können besonders leichte Sandwichbleche erzeugt werden.

In weiterer Ausgestaltung der Erfindung ist vorgesehen, dass die Kernschicht aus einem Faserverbundwerkstoff hergestellt ist. Faserverbundwerkstoffe umfassen typischerweise zwei Hauptkomponenten, nämlich eine Matrix sowie verstärkende Fasern. Es handelt sich daher um einen Mehrphasen- oder Mischwerkstoff. Durch gegenseitige Wechselwirkungen der beiden Hauptkomponenten weisen Faserverbundwerkstoffe oftmals höherwertige Eigenschaften auf als jede der beiden Hauptkomponenten isoliert betrachtet. Bei den verstärkenden Fasern kann es sich um Glasfasern, Kohlenstofffasern oder Aramidfasern handeln.

Nach einer weiteren Ausbildung der Erfindung wird vorgeschlagen, dass die Kernschicht eine Dicke im Bereich zwischen 0,04 mm und 1,2 mm, insbesondere im Bereich zwischen 0,3 mm und 1,0 mm aufweist. Durch eine Dicke der Kernschicht im angegebenen Bereich wird ein ausreichender Abstand zwischen den beiden Deckschichten bei gleichwohl ausreichend festem Zusammenhalt des Sandwichbleches gewährleistet.

Eine weitere Lehre der Erfindung sieht vor, dass die Dicke der Kernschicht größer ist als die Dicke einer Deckschicht, insbesondere als die Summe der Dicken der beiden Deckschichten. Durch eine Kombination aus dünnen Deckschichten und einer dickeren Kernschicht können Sandwichbleche mit geringem Gewicht und gleichwohl hoher Biegesteifigkeit erhalten werden. Durch die erfindungsgemäße Lösung können trotz der geringen Dicke der Deckschichten Anschlusselemente mit dem Sandwichblech verbunden werden.

Eine weitere Ausgestaltung der Erfindung zeichnet sich aus durch einen Gewindebolzen oder Sägezahnbolzen als Anschlusselement. Vorzugsweise ist der Bolzen zylindrisch geformt. Bolzen, insbesondere Gewinde- oder Sägezahnbolzen haben den Vorteil, dass sie in das Sandwichblech eingeschraubt oder eingeschlagen werden können und bis zur Ausbildung der stoffschlüssigen Verbindung sicher in ihrer Position verbleiben. Einige Gewinde- und Sägezahnbolzen haben zudem den Vorteil, dass sie ohne Bohrung direkt in das Sandwichblech eingeschraubt bzw. eingeschlagen werden können.

Gemäß einer weiteren Ausbildung der Erfindung weist das Anschlusselement eine Spitze, insbesondere eine kegelförmige Spitze auf. Durch die Spitze kann das Anschlusselement besonders präzise durch das Sandwichblech geschraubt bzw. geschlagen werden. Eine Spitze hat besondere Vorteile bei Anschlusselementen, die ohne Bohrung direkt in das Sandwichblech eingeschraubt bzw. eingeschlagen werden sollen.

Nach einer weiteren Ausgestaltung der Erfindung wird vorgeschlagen, dass das Anschlusselement einen Gewindeabschnitt aufweist. Durch den Gewindeabschnitt kann das Anschlusselement besonders einfach in das Sandwichblech eingeschraubt werden. Vorzugsweise handelt es sich um ein selbstschneidendes Gewinde, so dass das Anschlusselement auch ohne Bohrung oder Gegengewinde in das Sandwichblech eingeschraubt werden kann.

In weiterer Ausbildung der Erfindung ist vorgesehen, dass das Anschlusselement einen zylindrischen Abschnitt aufweist. Der zylindrische Abschnitt ist vorzugsweise wenigstens so lang wie die Dicke des Sandwichbleches, mit dem das Anschlusselement verbunden werden soll. Auf diese Weise kann das Anschlusselement im Bereich des zylindrischen Abschnitts mit dem Sandwichblech verbunden werden. Dies hat den Vorteil, dass eine gleichmäßige Kontaktfläche zwischen Anschlusselement und Sandwichblech entsteht, die eine gleichmäßigere Verschweißung erlaubt, als dies beispielsweise bei einer Verschweißung eines Gewindeabschnitts möglich wäre. Insbesondere können durch den zylindrischen Abschnitt runde, umlaufende Schweißnähte zwischen dem Anschlusselement und den beiden Deckschichten des Sandwichbleches erzielt werden.

Das Anschlusselement weist eine Grundplatte auf. Durch die Grundplatte kann eine ebene Fläche erhalten werden, die als Anschlag für eine der Deckschichten dienen kann, wenn das Anschlusselement durch das Sandwichblech hindurch geführt wird. Zudem kann die Kontaktfläche zwischen der Grundplatte und der Deckschicht für eine Verschweißung genutzt werden. Weiterhin kann die Grundplatte das Einschrauben oder Einschlagen des Anschlusselementes erleichtern, da das Werkzeug an der Grundplatte besonders einfach angesetzt werden kann (z.B. Schraubendreher, Hammer).

Zu dieser Lehre wird weiter vorgeschlagen, dass die Grundplatte wenigstens einen Zahn aufweist. Vorzugsweise sind drei oder mehr Zähne vorgesehen. Die Zähne sollten in Richtung der Spitze des Anschlusselementes ausgerichtet sein und dienen dazu, eine formschlüssige Verbindung mit dem Sandwichblech auszubilden. Hierzu dringen die abstehenden Zähne beim Einschrauben oder Einschlagen des Anschlusselements in die Oberfläche des Sandwichbleches ein und halten das Anschlusselement sicher in seiner Position. Dies erleichtert die anschließende Erzeugung einer stoffschlüssigen Verbindung zwischen Anschlusselement und Sandwichblech. Die Zähne können beispielsweise erzeugt werden, indem einige Bereich der Grundplatte aus der Grundplatte heraus gebogen werden.

Gemäß einer weiteren Ausbildung des Verfahrens wird vorgeschlagen, dass das Anschlusselement in Schritt c) durch beide Deckschichten des Sandwichbleches geschraubt und/oder geschlagen wird. Schrauben und Schlagen stellen Fertigungsverfahren dar, die mit bewährten Werkzeugen besonders schnell und mit einem hohen Automatisierungsgrad durchgeführt werden können. Zudem ermöglichen beide Fertigungsverfahren - bei entsprechend geformten Anschlusselementen - das Einschrauben bzw. Einschlagen des Anschlusselementes ohne vorherige Erzeugung einer Bohrung.

Schließlich ist nach einer weiteren Ausgestaltung der Erfindung vorgesehen, dass beide Deckschichten auch nach der Verbindung mit dem Anschlusselement mindestens im Bereich des Anschlusselementes durch die Kernschicht voneinander beabstandet sind. Mit anderen Worten sollen die beiden Deckschichten im Bereich des Anschlusselements zwar mit dem Anschlusselement, nicht jedoch mit der jeweils anderen Deckschicht verbunden werden. Vorzugsweise sollen die beiden Deckschichten an keiner Stelle direkt und unmittelbar miteinander verbunden werden. Durch die Sicherstellung eines definierten Abstands zwischen beiden Deckschichten bleibt die Biegesteifigkeit des Sandwichbleches erhalten. Zudem bleiben beide Deckschichten durch die Kernschicht thermisch und akustisch entkoppelt.

Die Erfindung wird nachfolgend anhand einer lediglich ein bevorzugtes Ausführungsbeispiel darstellenden Zeichnung näher erläutert. In der Zeichnung zeigen:

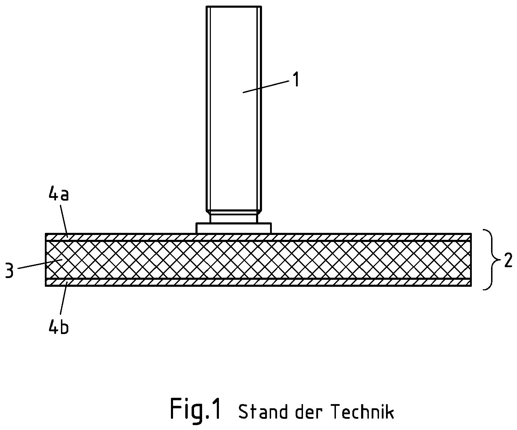

- Fig. 1: ein aus dem Stand der Technik bekanntes Verfahren zum Verbinden eines Anschlusselements mit einem Sandwichblech,

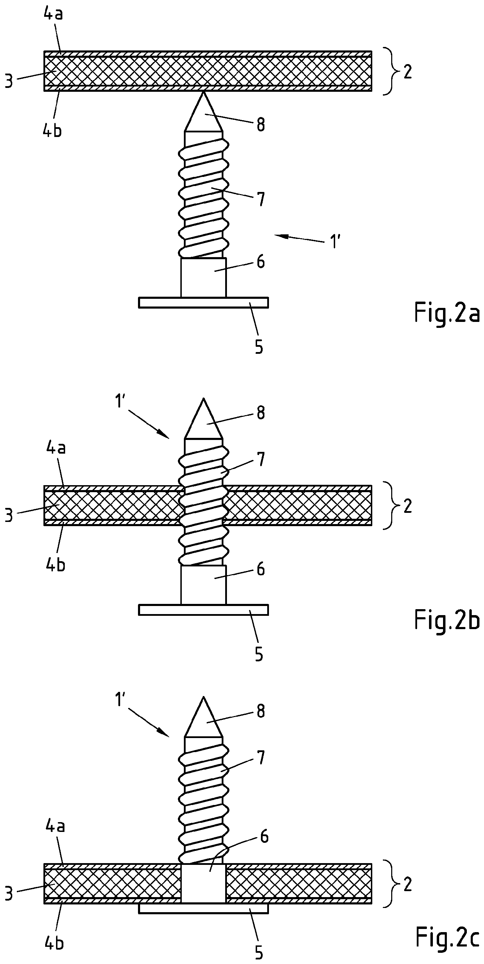

- Fig. 2a: einen ersten Schritt einer ersten Ausgestaltung des erfindungsgemäßen Verfahrens zum Verbinden eines Anschlusselements mit einem Sandwichblech,
- Fig. 2b: einen zweiten Schritt einer ersten Ausgestaltung des erfindungsgemäßen Verfahrens zum Verbinden eines Anschlusselements mit einem Sandwichblech,
- Fig. 2c: einen dritten Schritt einer ersten Ausgestaltung des erfindungsgemäßen Verfahrens zum Verbinden eines Anschlusselements mit einem Sandwichblech,

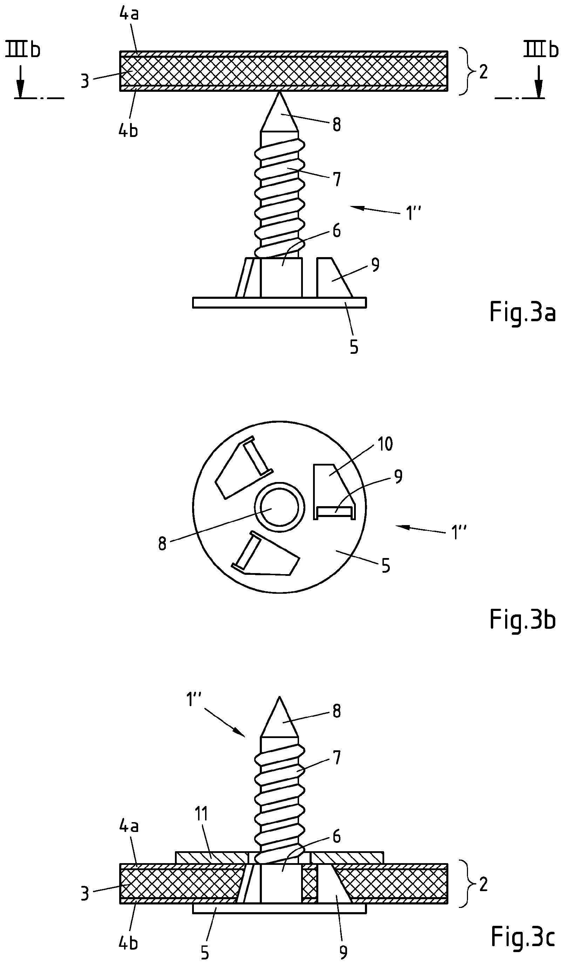

- Fig. 3a: einen ersten Schritt einer zweiten Ausgestaltung des erfindungsgemäßen Verfahrens zum Verbinden eines Anschlusselements mit einem Sandwichblech,
- Fig. 3b: das Anschlusselement aus Fig. 3a in einer Draufsicht aus Richtung der in Fig. 3a eingezeichneten Ebene IIIb-IIIb, und
- Fig. 3c: einen zweiten Schritt einer zweiten Ausgestaltung des erfindungsgemäßen Verfahrens zum Verbinden eines Anschlusselements mit einem Sandwichblech.

In Fig. 1 ist ein aus dem Stand der Technik bekanntes Verfahren zum Verbinden eines Anschlusselements 1 mit einem Sandwichblech 2 dargestellt. Das Sandwichblech 2 umfasst eine zentral angeordnete Kernschicht 3, die mit zwei außen angeordneten Deckschichten 4a, 4b verbunden ist. Bei dem Anschlusselement 1 handelt es sich um einen Schweißbolzen. Das Anschlusselement 1 wird nach einem bekannten Verfahren mit dem Sandwichblech 2 verbunden, indem das Anschlusselement 1 auf die Oberfläche der oberen Deckschicht 4a aufgesetzt wird und mit einem geeigneten Schweißverfahren mit der oberen Deckschicht 4a verschweißt wird. Auf diese Weise entsteht eine stoffschlüssige Verbindung zwischen dem Anschlusselement 1 und der oberen Deckschicht 4a. Eine Verbindung zwischen dem Anschlusselement 1 und der Kernschicht 3 oder der unteren Deckschicht 4b wird durch das in Fig. 1 dargestellte Verfahren hingegen nicht erreicht, weshalb über das Anschlusselement 1 nur geringe Kräfte, insbesondere geringe Querkräfte in das Sandwichblech 2 eingeleitet werden können.

Fig. 2a bis Fig. 2c zeigen drei Schritte einer ersten Ausgestaltung des erfindungsgemäßen Verfahrens zum Verbinden eines Anschlusselements 1' mit einem Sandwichblech 2. Auch hier handelt es sich um ein Sandwichblech 2 mit einer zentral angeordneten Kernschicht 3 und mit zwei außen angeordneten Deckschichten 4a, 4b. Bei dem in Fig. 2a dargestellten und insoweit bevorzugten Anschlusselement 1' handelt es gemäß der Erfindung sich um einen Gewindebolzen zum Verschweißen. Das Anschlusselement 1' weist eine Grundplatte 5, einen zylindrischen Abschnitt 6, einen Gewindeabschnitt 7 und eine kegelförmige Spitze 8 auf. Die Länge des zylindrischen Abschnitts 6 entspricht etwa der Dicke des Sandwichbleches 2. Vorzugsweise ist das Anschlusselement 1' aus Metall hergestellt und mindestens im Bereich des Gewindeabschnitts 7 gehärtet.

In Fig. 2a ist der erste Schritt dargestellt, bei dem das Anschlusselement 1' etwa senkrecht zu dem Sandwichblech 2 positioniert wird und bei dem das Anschlusselement 1' mit seiner Spitze 8 auf die untere Deckschicht 4b des Sandwichbleches 2 aufgesetzt wird.

Fig. 2b zeigt den zweiten Schritt, bei dem das Anschlusselement 1' bereits durch sämtliche Schichten 3, 4a, 4b des Sandwichbleches 2 durchgeführt ist. Hierzu kann beispielsweise eine Bohrung in das Sandwichblech 2 eingebracht werden, in die das Anschlusselement 1' dann eingeführt wird. Alternativ kann das Anschlusselement 1' auch ohne zuvor erzeugte Bohrung in das Sandwichblech 2 eingeschlagen und/oder eingeschraubt werden. Das Anschlusselement 1' kann beispielsweise im Bereich seiner Spitze 8 in das Sandwichblech 2 eingeschlagen werden und im Bereich seines Gewindeabschnitts 7 weiter in das Sandwichblech 2 eingeschraubt werden.

In Fig. 2c ist der dritte Schritt dargestellt, bei dem das Anschlusselement 1' so weit durch das Sandwichblech 2 hindurch geführt ist, dass die Grundplatte 5 des Anschlusselements 1 an die untere Deckschicht 4b des Sandwichbleches 2 stößt und somit flächig auf einer Oberfläche des Sandwichbleches 2 aufliegt. Bei der in Fig. 2c dargestellten Stellung ist deutlich erkennbar, dass die Länge des zylindrischen Abschnitts 6 des Anschlusselements 1' etwa der Dicke des Sandwichbleches 2 entspricht. Dies hat zur Folge, dass das Anschlusselement 1' sämtliche Schichten des Sandwichbleches 2 und insbesondere beide Deckschichten 4a, 4b mit seinem zylindrischen Abschnitt 6 berührt oder jedenfalls in unmittelbarer Nähe zu den beiden Deckschichten 4a, 4b angeordnet ist. In der in Fig. 2c dargestellten Stellung kann das Anschlusselement 1' daher besonders einfach und zuverlässig mit dem Sandwichblech 2 verbunden werden, insbesondere verschweißt werden. Da das Anschlusselement 1' durch sämtliche Schichten 3, 4a, 4b des Sandwichbleches 2 hindurch geführt ist, kann das Anschlusselement 1' grundsätzlich auch mit jeder dieser Schichten verbunden werden. Insbesondere kann der zylindrische Abschnitt 6 des Anschlusselements 1' sowohl mit der oberen Deckschicht 4a als auch mit der unteren Deckschicht 4b verschweißt werden. Hierzu eignet sich beispielsweise Widerstandsschweißen, insbesondere Kondensator-Entladungsschweißen. Zusätzlich kann die Grundplatte 5 des Anschlusselements 1' mit einer der Deckschichten 4a, 4b verschweißt werden (in Fig. 2c mit der unteren Deckschicht 4b).

Fig. 3a zeigt einen ersten Schritt einer zweiten Ausgestaltung des erfindungsgemäßen Verfahrens zum Verbinden eines Anschlusselements 1" mit einem Sandwichblech 2. Die bereits im Zusammenhang mit Fig. 2a bis Fig. 2c beschriebenen Bereiche des Anschlusselements 1' sind in Fig. 3a mit entsprechenden Bezugszeichen versehen. Das in Fig. 3a dargestellte Anschlusselement 1" unterscheidet sich von dem in Fig. 2a bis Fig. 2c gezeigten Anschlusselement 1' dadurch, dass das Anschlusselement 1" an seiner Grundplatte 5 mehrere Zähne 9 aufweist, die von der Grundplatte 5 in Richtung der Spitze 8 ausgerichtet sind. Abgesehen von den Zähnen 9 (und den weiter unten beschriebenen Ausnehmungen 10) entspricht das in Fig. 3a gezeigte Anschlusselement 1" dem Anschlusselement 1' aus Fig. 2a bis Fig. 2c. Zudem entspricht die in Fig. 3a gezeigte Stellung der bereits im Zusammenhang mit Fig. 2a beschriebenen Stellung, in der das Anschlusselement 1" etwa senkrecht zu dem Sandwichblech 2 positioniert wird und in der das Anschlusselement 1" mit seiner Spitze 8 auf die untere Deckschicht 4b des Sandwichbleches 2 aufgesetzt wird.

In Fig. 3b ist das Anschlusselement 1" aus Fig. 3a in einer Draufsicht aus Richtung der in Fig. 3a eingezeichneten Ebene IIIb-IIIb dargestellt. Die bereits im Zusammenhang mit Fig. 3a beschriebenen Bereiche des Anschlusselements 1" sind in Fig. 3b mit entsprechenden Bezugszeichen versehen. Deutlich erkennbar ist die runde Grundplatte 5 des Anschlusselements 1" über der mittig die kegelförmige Spitze 8 angeordnet ist.

Neben jedem Zahn 9 ist eine Ausnehmung 10 angeordnet, deren Form etwa der Form des benachbarten Zahns 9 entspricht. Dies ermöglicht es, die Zähne 9 zu erzeugen, indem Material aus der Grundplatte 5 in Richtung der Spitze 8 herausgebogen wird. Um den Biegevorgang zu erleichtern, können die Zähne 9 vor dem Biegevorgang durch Schneiden oder Stanzen abschnittsweise von dem übrigen Material der Grundplatte 5 getrennt werden.

Fig. 3c zeigt einen zweiten Schritt einer zweiten Ausgestaltung des erfindungsgemäßen Verfahrens zum Verbinden eines Anschlusselements 1" mit einem Sandwichblech 2. Die bereits im Zusammenhang mit Fig. 3a und Fig. 3b beschriebenen Bereiche des Anschlusselements 1" sind in Fig. 3c mit entsprechenden Bezugszeichen versehen. Die in Fig. 3c gezeigte Stellung entspricht der bereits im Zusammenhang mit Fig. 2c beschriebenen Stellung, in der das Anschlusselement 1" so weit durch das Sandwichblech 2 hindurch geführt ist, dass die Grundplatte 5 des Anschlusselements 2 an die untere Deckschicht 4b des Sandwichbleches 2 stößt und somit flächig auf einer Oberfläche des Sandwichbleches 2 aufliegt. Schließlich ist in Fig. 3c ein Unterlegscheibe 11 vorgesehen, die der Grundplatte 5 gegenüberliegend angeordnet ist und somit flächig auf der oberen Deckschicht 4a des Sandwichbleches 2 aufliegt.

### Bezugszeichenliste:

- 1, 1', 1":: Anschlusselement
- 2:: Sandwichblech
- 3:: Kernschicht
- 4a, 4b:: Deckschicht
- 5:: Grundplatte
- 6:: zylindrischer Abschnitt
- 7:: Gewindeabschnitt
- 8:: Spitze
- 9:: Zahn
- 10:: Ausnehmung
- 11:: Unterlegscheibe

## Patentansprüche

1. Verfahren zum Verbinden eines Bolzens als Anschlusselements (1', 1") mit einem Sandwichblech (2), umfassend die folgenden Schritte:
a) Bereitstellen eines Sandwichbleches (2) mit wenigstens einer zentral angeordneten Kernschicht (3) aus Kunststoff und mit zwei außen angeordneten Deckschichten (4a, 4b) aus Metall, d.h. eine untere Deckschicht (4b) und eine obere Deckschicht (4a),
b) Bereitstellen eines Anschlusselementes (1', 1") aus Metall, wobei das Anschlusselement (1', 1") eine Grundplatte (5) aufweist,
c) Durchführen des Anschlusselementes (1', 1") durch wenigstens eine Deckschicht (4a, 4b) des Sandwichbleches (2), und
d) Verbinden des Anschlusselementes (1', 1"), mit dem Sandwichblech (2),
wobei
das Anschlusselement (1', 1") stoffschlüssig mit beiden Deckschichten (4a, 4b) verbunden wird
**dadurch gekennzeichnet, dass**
das Anschlusselement (1', 1") in Schritt c) durch beide Deckschichten (4a, 4b) des Sandwichbleches (2) soweit hindurchgeführt wird, dass die Grundplatte (5) des Anschlusselements (1', 1") an die untere Deckschicht (4b) des Sandwichbleches (2) stößt und somit flächig auf der Oberfläche des Sandwichbleches (2) aufliegt.

2. Verfahren nach Anspruch 1,
**dadurch gekennzeichnet, dass**
das Anschlusselement (1', 1") mit beiden Deckschichten (4a, 4b) verschweißt wird.

3. Verfahren nach Anspruch 2,
**dadurch gekennzeichnet, dass**
das Anschlusselement (1', 1") durch Widerstandsschweißen, insbesondere Kondensator-Entladungsschweißen mit beiden Deckschichten (4a, 4b) verschweißt wird.

4. Verfahren nach einem der Ansprüche 1 bis 3,
**dadurch gekennzeichnet, dass**
die Deckschichten (4a, 4b) aus Stahlblech hergestellt sind.

5. Verfahren nach einem der Ansprüche 1 bis 4,
**dadurch gekennzeichnet, dass**
die Deckschichten (4a, 4b) eine Dicke im Bereich zwischen 0,1 mm und 0,5 mm aufweisen.

6. Verfahren nach einem der Ansprüche 1 bis 5,
**dadurch gekennzeichnet, dass**
die Kernschicht (3) aus einem Faserverbundwerkstoff hergestellt ist.

7. Verfahren nach einem der Ansprüche 1 bis 6,
**dadurch gekennzeichnet, dass**
die Kernschicht (3) eine Dicke im Bereich zwischen 0,04 mm und 1,2 mm, insbesondere im Bereich zwischen 0,3 mm und 1,0 mm aufweist.

8. Verfahren nach einem der Ansprüche 1 bis 7,
**dadurch gekennzeichnet, dass**
die Dicke der Kernschicht (3) größer ist als die Dicke einer Deckschicht (4a, 4b), insbesondere als die Summe der Dicken der beiden Deckschichten (4a, 4b).

9. Verfahren nach einem der Ansprüche 1 bis 8,
**gekennzeichnet durch**
einen Gewindebolzen oder Sägezahnbolzen als Anschlusselement (1', 1").

10. Verfahren nach einem der Ansprüche 1 bis 9,
**dadurch gekennzeichnet, dass**
das Anschlusselement (1', 1") eine Spitze (8), insbesondere eine kegelförmige Spitze (8) aufweist.

11. Verfahren nach einem der Ansprüche 1 bis 10,
**dadurch gekennzeichnet, dass**
das Anschlusselement (1', 1") einen Gewindeabschnitt (7) aufweist.

12. Verfahren nach einem der Ansprüche 1 bis 11,
**dadurch gekennzeichnet, dass**
das Anschlusselement (1', 1") einen zylindrischen Abschnitt (6) aufweist.

13. Verfahren nach Anspruch 1,
**dadurch gekennzeichnet, dass**
die Grundplatte (5) wenigstens einen Zahn (9) aufweist.

14. Verfahren nach einem der Ansprüche 1 bis 13,
**dadurch gekennzeichnet, dass**
das Anschlusselement (1', 1") in Schritt c) durch beide Deckschichten (4a, 4b) des Sandwichbleches (2) geschraubt und/oder geschlagen wird.

15. Verfahren nach einem der Ansprüche 1 bis 14,
**dadurch gekennzeichnet, dass**
beide Deckschichten (4a, 4b) auch nach der Verbindung mit dem Anschlusselement (1', 1") mindestens im Bereich des Anschlusselementes (1', 1") durch die Kernschicht (3) voneinander beabstandet sind.

## Claims

1. Method for connecting a bolt as a connecting element (1', 1") to a sandwich sheet (2), said method comprising the following steps:
a) providing a sandwich sheet (2) comprising at least one centrally arranged core layer (3) made of plastic and comprising two cover layers (4a, 4b) made of metal arranged on the outside, i.e. a lower cover layer (4b) and an upper cover layer (4a),
b) providing a connecting element (1', 1") made of metal, wherein the connecting element (1', 1") comprises a base plate (5),
c) feeding the connecting element (1', 1") through at least one cover layer (4a, 4b) of the sandwich sheet (2), and
d) connecting the connecting element (1', 1") to the sandwich sheet (2),
wherein
the connecting element (1', 1") is integrally connected to both cover layers (4a, 4b),
**characterized in that**
the connecting element (1', 1") is fed through both cover layers (4a, 4b) of the sandwich sheet (2) in step c) to such an extent that the base plate (5) of the connecting element (1', 1") hits against the lower cover layer (4b) of the sandwich sheet (2) and thereby lies areally against the surface of the sandwich sheet (2).

2. Method according to Claim 1,
**characterized in that**
the connecting element (1', 1") is welded to both cover layers (4a, 4b).

3. Method according to Claim 2,
**characterized in that**
the connecting element (1', 1") is welded to both cover layers (4a, 4b) by resistance welding, in particular capacitor discharge welding.

4. Method according to one of Claims 1 to 3,
**characterized in that**
the cover layers (4a, 4b) are produced from steel sheet.

5. Method according to one of Claims 1 to 4,
**characterized in that**
the cover layers (4a, 4b) have a thickness in the range of between 0.1 mm and 0.5 mm.

6. Method according to one of Claims 1 to 5,
**characterized in that**
the core layer (3) is produced from a fibre composite material.

7. Method according to one of Claims 1 to 6,
**characterized in that**
the core layer (3) has a thickness in the range of between 0.04 mm and 1.2 mm, in particular in the range of between 0.3 mm and 1.0 mm.

8. Method according to one of Claims 1 to 7,
**characterized in that**
the thickness of the core layer (3) is greater than the thickness of one cover layer (4a, 4b), in particular than the sum total of the thicknesses of the two cover layers (4a, 4b).

9. Method according to one of Claims 1 to 8,
**characterized by**
a threaded bolt or saw tooth bolt as the connecting element (1', 1").

10. Method according to one of Claims 1 to 9,
**characterized in that**
the connecting element (1', 1") comprises a tip (8), in particular a conical tip (8).

11. Method according to one of Claims 1 to 10,
**characterized in that**
the connecting element (1', 1") comprises a threaded portion (7).

12. Method according to one of Claims 1 to 11,
**characterized in that**
the connecting element (1', 1") comprises a cylindrical portion (6).

13. Method according to Claim 1,
**characterized in that**
the base plate (5) comprises at least one tooth (9).

14. Method according to one of Claims 1 to 13,
**characterized in that**
the connecting element (1', 1") is screwed and/or is punched through both cover layers (4a, 4b) of the sandwich sheet (2) in step c).

15. Method according to one of Claims 1 to 14,
**characterized in that**
both cover layers (4a, 4b) are spaced apart from one another by the core layer (3) at least in the region of the connecting element (1', 1") even after the connection to the connecting element (1', 1").

## Revendications

1. Procédé de connexion d'un boulon en tant qu'élément de raccordement (1', 1") à une tôle sandwich (2), comprenant les étapes suivantes :
a) fourniture d'une tôle sandwich (2) avec au moins une couche noyau (3) disposée centralement, en matière plastique, et avec deux couches de recouvrement (4a, 4b) disposées à l'extérieur, en métal, c'est-à-dire une couche de recouvrement inférieure (4b) et une couche de recouvrement supérieure (4a),
b) fourniture d'un élément de raccordement (1', 1") en métal, l'élément de raccordement (1', 1") présentant une plaque de base (5),
c) passer l'élément de raccordement (1', 1") à travers au moins une couche de recouvrement (4a, 4b) de la tôle sandwich (2), et
d) connexion de l'élément de raccordement (1', 1") à la tôle sandwich (2),
l'élément de raccordement (1', 1") étant connecté par engagement par liaison de matière aux deux couches de recouvrement (4a, 4b),
**caractérisé en ce que**
l'élément de raccordement (1', 1"), dans l'étape c), est passé à travers les deux couches de recouvrement (4a, 4b) de la tôle sandwich (2) dans une mesure telle que la plaque de base (5) de l'élément de raccordement (1', 1") bute contre la couche de recouvrement inférieure (4b) de la tôle sandwich (2) et s'applique ainsi à plat sur la surface de la tôle sandwich (2).

2. Procédé selon la revendication 1,
**caractérisé en ce que**
l'élément de raccordement (1', 1") est soudé aux deux couches de recouvrement (4a, 4b).

3. Procédé selon la revendication 2,
**caractérisé en ce que**
l'élément de raccordement (1', 1") est soudé par soudage résistance, en particulier par soudage à décharge de condensateur, aux deux couches de recouvrement (4a, 4b).

4. Procédé selon l'une quelconque des revendications 1 à 3,
**caractérisé en ce que**
les couches de recouvrement (4a, 4b) sont fabriquées en tôle d'acier.

5. Procédé selon l'une quelconque des revendications 1 à 4,
**caractérisé en ce que**
les couches de recouvrement (4a, 4b) présentent une épaisseur comprise entre 0,1 mm et 0,5 mm.

6. Procédé selon l'une quelconque des revendications 1 à 5,
**caractérisé en ce que**
la couche noyau (3) est fabriquée en un matériau composite renforcé par des fibres.

7. Procédé selon l'une quelconque des revendications 1 à 6,
**caractérisé en ce que**
la couche noyau (3) présente une épaisseur comprise dans la plage de 0,04 mm à 1,2 mm, notamment dans la plage de 0,3 mm à 1,0 mm.

8. Procédé selon l'une quelconque des revendications 1 à 7,
**caractérisé en ce que**
l'épaisseur de la couche noyau (3) est supérieure à l'épaisseur d'une couche de recouvrement (4a, 4b), en particulier à la somme des épaisseurs des deux couches de recouvrement (4a, 4b).

9. Procédé selon l'une quelconque des revendications 1 à 8,
**caractérisé par**
un boulon fileté ou un boulon en dents de scie en tant qu'élément de raccordement (1', 1").

10. Procédé selon l'une quelconque des revendications 1 à 9,
**caractérisé en ce que**
l'élément de raccordement (1', 1") présente une pointe (8), en particulier une pointe conique (8).

11. Procédé selon l'une quelconque des revendications 1 à 10,
**caractérisé en ce que**
l'élément de raccordement (1', 1") présente une portion filetée (7).

12. Procédé selon l'une quelconque des revendications 1 à 11,
**caractérisé en ce que**
l'élément de raccordement (1', 1") présente une portion cylindrique (6).

13. Procédé selon la revendication 1,
**caractérisé en ce que**
la plaque de base (5) présente au moins une dent (9).

14. Procédé selon l'une quelconque des revendications 1 à 13,
**caractérisé en ce que**
l'élément de raccordement (1', 1"), à l'étape c), est vissé et/ou martelé à travers les deux couches de recouvrement (4a, 4b) de la tôle sandwich (2).

15. Procédé selon l'une quelconque des revendications 1 à 14,
**caractérisé en ce que**
les deux couches de recouvrement (4a, 4b), également après la connexion à l'élément de raccordement (1', 1"), sont espacées l'une de l'autre au moins dans la région de l'élément de raccordement (1', 1") par la couche noyau (3).
